# EUROPÄISCHE PATENTANMELDUNG

(11) **EP 2 518 980 A2**
(43) Veröffentlichungstag der Anmeldung: **31.10.2012**
(21) Anmeldenummer: 12002954.1
(22) Anmeldetag: 26.04.2012
(51) Int. Cl.: H04M 1/04

(54) **Haltevorrichtung für ein Mobiltelefon**

(30) Priorität: 29.04.2011 DE 102011100540
(71) Anmelder: BURY Sp. z o.o., 39-300 Mielec (PL)
(72) Erfinder: Bury, Henryk, 32584 Löhne (DE); Brzana, Jacek, 38-451 Równe (PL)
(74) Vertreter: Friedrich, Andreas

(57) **Zusammenfassung**

Die Erfindung betrifft eine Haltevorrichtung (1) für ein Mobiltelefon, mit einer Aufnahmeeinrichtung (2) zum Aufnehmen des Mobiltelefons, die eine Anlagefläche (4) und wenigstens zwei Halteelemente (6) umfasst, die von der Anlagefläche (4) hervorstehen, die dadurch gekennzeichnet ist, dass zumindest eines der Halteelemente (6) eine Einstelleinrichtung zum Einstellen einer Länge L aufweist, um die das Halteelement (6) von der Anlagefläche (4) hervorsteht und wobei die Aufnahmeeinrichtung (2) in eine Haltestellung und in eine Freigabestellung bringbar ist, wobei die Aufnahmeeinrichtung (2) in der Haltestellung mit einem in die Haltevorrichtung (1) eingesetzten Mobiltelefon formschlüssig zusammenwirkt.

## Beschreibung

Die Erfindung betrifft eine Haltevorrichtung für ein Mobiltelefon mit einer Aufnahmeeinrichtung zum Aufnehmen des Mobiltelefons, die eine Anlagefläche und wenigstens zwei Halteelemente umfasst, die von der Anlagefläche hervorstehen.

Eine derartige Haltevorrichtung ist beispielsweise aus der DE 10 2004 062 177 B4 bekannt. Bei der dort beschriebenen Ausführungsform einer Haltevorrichtung wird die Anlagefläche der Aufnahmeeinrichtung durch die Rückwand eines Gehäuses gebildet. Von dieser stehen seitlich zwei Backen hervor, deren Abstand auf die Breite eines einzusetzenden Mobiltelefons einstellbar sind. Die seitlichen Backen sind jeweils mit einer Polsterung versehen und bleiben für das Einsetzen und Herausnehmen des Mobiltelefons ortsfest. Zwischen den Backen und dem eingesetzten Mobiltelefon kommt es daher lediglich zu einer reibschlüssigen Verbindung, die das Telefon in Position hält.

Um eine Verschiebung parallel zu der Anlagefläche zu verhindern, weist die dort beschriebene Haltevorrichtung eine zusätzliche vertikale Backe auf, die ebenfalls mit einer Polsterung versehen ist. Der Abstand zwischen dieser dritten, vertikalen Backe und den beiden seitlichen Backen lässt sich ebenfalls einstellen, sodass auf die Ausmaße in Länge und Breite eines jeden Mobiltelefons eingegangen werden kann.

Nachteilig ist jedoch, dass es beim Einsetzen des Mobiltelefons lediglich zu einer reibschlüssigen Verbindung kommt. Dabei werden die an den einzelnen Backen vorgesehenen Polsterungen zusammengedrückt, sodass sie aufgrund ihrer elastischen Eigenschaften eine Kraft auf das eingesetzte Mobiltelefon ausüben. Nach längerem Gebrauch nehmen die Polsterungen jedoch die durch das eingesetzte Mobiltelefon bedingte Form an, sodass die Haltekraft im Laufe der Zeit nachlässt. Zudem kann bei einer reibschlüssigen Verbindung diese jederzeit mit genügend Kraftaufwand ohne eine Beschädigung der Haltevorrichtung gelöst werden, sodass insbesondere bei der Verwendung der Haltevorrichtung in Kraftfahrzeugen das eingesetzte Mobiltelefon aus der Halterung gelöst werden kann, wenn das Fahrzeug beispielsweise über Schlaglöcher oder Hindernisse fährt.

Zudem kann ein in die Haltevorrichtung gemäß dem Stand der Technik eingesetztes Mobiltelefon innerhalb der Halterung verrutschen oder verschoben werden, ohne dass es die Halterung gleich verlässt. Oftmals werden Mobiltelefone in einer derartigen Haltevorrichtung jedoch gleichzeitig geladen oder beispielsweise mit einer in einem Fahrzeug integrierten Freisprecheinrichtung verbunden. Dabei werden elektrische Kontakte und Stecker miteinander verbunden, die bei einer Verschiebung des Mobiltelefons innerhalb der Halterung starken mechanischen Belastungen ausgesetzt wären.

Der Erfindung liegt daher die Aufgabe zugrunde, eine gattungsgemäße Haltevorrichtung so weiter zu entwickeln, dass Mobiltelefone, insbesondere Smartphones, mit unterschiedlichen Ausmaßen sicher und stabil in der Haltevorrichtung gehalten werden und einfach und schnell in die Haltevorrichtung eingesetzt beziehungsweise aus ihr herausgenommen werden können.

Die Erfindung löst die gestellte Aufgabe durch eine gattungsgemäße Haltevorrichtung, die sich dadurch auszeichnet, dass zumindest eines der Halteelemente eine Einstelleinrichtung zum Einstellen einer Länge L aufweist, um die das Halteelement von der Rückwand hervorsteht und die Aufnahmeeinrichtung in eine Haltestellung und in eine Freigabestellung bringbar ist, wobei die Aufnahmeeinrichtung in der Haltestellung mit einem in die Haltevorrichtung eingesetzten Mobiltelefon formschlüssig zusammenwirkt.

Dadurch, dass ein in die Haltevorrichtung eingesetztes Mobiltelefon in der Haltestellung der Aufnahmeeinrichtung formschlüssig gehalten wird und nicht, wie im Stand der Technik reibschlüssig, wird die Halterung bzw. Lagerung deutlich stabiler. Anders als bei einer reibschlüssigen Verbindung kann eine formschlüssige Verbindung nicht ohne Beschädigung über einen erhöhten Kraftaufwand gelöst werden. Selbst bei dem Überfahren von Schlaglöchern oder anderen Hindernissen ist das Mobiltelefon folglich in der Aufnahmeeinrichtung der Haltevorrichtung sicher gelagert. Zum Herausnehmen des Mobiltelefons aus der Haltevorrichtung wird die Aufnahmeeinrichtung in die Freigabestellung gebracht. Dies kann beispielsweise dadurch geschehen, dass die Halteelemente, die in der Haltestellung mit dem Mobiltelefon formschlüssig zusammenwirken, in der Freigabestellung einen größeren Abstand zueinander aufweisen, sodass das Mobiltelefon einfach entnommen werden kann.

Die Halteelemente stehen von der Anlagefläche der Aufnahmeeinrichtung hervor. Durch die Länge L, um die sie über die Rückwand hervorstehen, wird die Tiefe der Aufnahmeeinrichtung bestimmt. Danach bestimmt sich folglich, wie dick ein aufzunehmendes Mobiltelefon sein kann, um es in der Aufnahmeeinrichtung verstauen zu können. Ist nun jedoch beispielsweise ein Mobiltelefon deutlich dünner als die Länge L der einzelnen Halteelemente, kann das Mobiltelefon die Aufnahmeeinrichtung zwar aufgrund der Formschlüssigkeit nicht verlassen, sofern sich diese in der Haltestellung befindet, es kann sich jedoch innerhalb der Aufnahmeeinrichtung in einer Richtung senkrecht zu der Anlagefläche, also entlang der Länge L, bewegen. In diesem Fall würden elektrische Stecker oder Kontakte weiterhin einer starken mechanischen Belastung ausgesetzt. Aus diesem Grund weist zumindest eines der Halteelemente eine Einstelleinrichtung auf, mit der die Länge L, also die Ausdehnung der Aufnahmeeinrichtung in einer Richtung senkrecht auf die Anlagefläche, eingestellt werden kann. Damit lässt sich die Tiefe der Aufnahmeeinrichtung auf die Dicke des einzusetzenden Mobiltelefons anpassen. Erst dann ist aufgrund dieser Einstellung zusammen mit dem formschlüssigen Zusammenwirken eine Bewegung des Mobiltelefons innerhalb der Aufnahmeeinrichtung nicht mehr oder nur noch in so begrenztem Maße möglich, dass eine Beschädigung oder übermäßige Beanspruchung von Steckverbindungen wirksam verhindert wird, sofern sich die Aufnahmeeinrichtung in der Haltestellung befindet.

In einer bevorzugten Ausführungsform weist die Aufnahmeeinrichtung vier Halteelemente auf, die an vier Ecken der Aufnahmeeinrichtung angeordnet sind. In diesem Fall umgreift jedes der Halteelemente in der Haltestellung der Aufnahmeeinrichtung eine Ecke des einzusetzenden Mobiltelefons. Damit werden insbesondere die oftmals an den Seitenflächen der Mobiltelefone vorgesehenen Druckknöpfe oder Regler oder andere Bedienelemente nicht beeinträchtigt und sind weiterhin für den Benutzer zugänglich. Zudem ist durch das Umgreifen der vier Ecken eine besonders sichere Halterung des einzusetzenden Mobiltelefons möglich. Alternativ dazu könnten auch beispielsweise drei Halteelemente vorgesehen sein, von denen zwei an Ecken und eines beispielsweise an einer kurzen Seite, beispielsweise an der unteren Seite, der Aufnahmeeinrichtung angeordnet sind. Auch in diesem Fall ist ein formschlüssiges Zusammenwirken der Halteelemente in der Haltestellung der Aufnahmeeinrichtung mit dem eingesetzten Mobiltelefon gewährleistet. Da jedoch beispielsweise Ladebuchsen oder Steckkontakte bei Mobiltelefonen und Smartphones oftmals an einer Seitenfläche angeordnet sind, würde durch diese Anordnung der Halteelemente gegebenenfalls ein oder mehrere dieser Bedienelemente oder Steckplätze nicht mehr zugänglich sein.

Vorteilhafterweise weist jedes der Halteelemente der Aufnahmeeinrichtung eine Einstelleinrichtung auf. Damit kann die Länge L, und damit die Tiefe der Aufnahmeeinrichtung für jedes der Halteelemente separat und individuell eingestellt werden. Dies ist insbesondere dann von Vorteil, wenn das einzusetzende Mobiltelefon beispielsweise an verschiedenen Ecken unterschiedlich dick ist. Dem kann durch das individuelle Einstellen der Länge L für jedes einzelne Halteelement Rechnung getragen werden. Es kann jedoch auch von Vorteil sein, dass eine Mehrzahl von Halteelementen eine gemeinsame Einstelleinrichtung aufweist, durch die Länge L dieser Mehrzahl von Halteelementen gemeinsam einstellbar ist. So weist beispielsweise ein Mobiltelefon oftmals im Bereich des Displays eine andere Dicke auf als im Bereich der Bedientasten. Werden beispielsweise vier Halteelemente vorgesehen, die an den vier Ecken der Aufnahmeeinrichtung und damit an den vier Ecken des aufzunehmenden Mobiltelefons angeordnet sind, sind die beiden Halteelemente, die im Bereich des Displays des Mobiltelefons angeordnet sind, auf die gleiche Höhe einzustellen. Dies kann bevorzugt durch eine gemeinsame Einstelleinrichtung geschehen, wodurch bei Anpassen der Aufnahmeeinrichtung beziehungsweise der Haltevorrichtung an das gewünschte Mobiltelefon Zeit gespart werden kann.

Vorzugsweise umfasst eine Einstelleinrichtung eine Rändelschraube. Über eine derartige Schraube ist es einfach und schnell möglich, die gewünschte Länge L des jeweiligen Halteelementes einzustellen. Zudem ist die Herstellung einfach und kostengünstig möglich und die Anzahl der zu verwendenden Bauteile stark begrenzt.

Als besonders vorteilhaft hat sich herausgestellt, wenn die Breite der Aufnahmeeinrichtung einstellbar ist. Alternativ oder zusätzlich dazu kann auch die Länge der Aufnahmeeinrichtung einstellbar sein. Damit wird die Flexibilität der Haltevorrichtung weiter erhöht, da nun nicht nur auf die Dicke des zu lagernden Mobiltelefons eingegangen werden kann, sondern auch Mobiltelefone unterschiedlicher Breite und Länge aufgenommen werden können. Für alle diese Mobiltelefone ist eine individuelle Einstellung von Länge und/oder Breite der Aufnahmevorrichtung sowie der Tiefe der Aufnahmevorrichtung möglich, sodass eine optimale Lagerung mit minimaler Bewegungsfreiheit des Mobiltelefons gewährleistet wird, solange sich die Aufnahmeeinrichtung in der Haltestellung befindet.

Um ein versehentliches Überführen der Aufnahmeeinrichtung aus der Haltestellung in die Freigabestellung zu verhindern, ist vorteilhafterweise eine Verriegelungseinrichtung vorgesehen, die die Aufnahmeeinrichtung in der Haltestellung verriegelt. Diese kann beispielsweise über ein Betätigungselement entriegelt werden, wenn die Aufnahmeeinrichtung aus der Haltestellung in die Freigabestellung gebracht werden soll. Damit ist sichergestellt, dass ein versehentliches Öffnen der Aufnahmeeinrichtung, beispielsweise aufgrund von Fahrmanövern oder sonstigen Erschütterungen, wirksam verhindert wird.

Die Haltevorrichtung umfasst vorteilhafterweise eine universelle Antenne. Zusätzlich oder alternativ dazu kann auch ein Mini-USB-Anschluss vorgesehen sein.

In einer bevorzugten Ausgestaltung der vorliegenden Erfindung verfügt die Haltevorrichtung an einer der Aufnahmeeinrichtung abgewandten Seite über einen Ansatz zum Befestigen der Haltevorrichtung. Dabei ist die Aufnahmeeinrichtung relativ zu diesem Ansatz um eine Schwenkachse schwenkbar ausgebildet. Mit dem Ansatz ist die Haltevorrichtung beispielsweise im Innenraum eines Kraftfahrzeuges befestigbar, so dass es für eine Person, die sich in dem Kraftfahrzeug befindet, möglich ist, ein Mobiltelefon, das sich in der Haltevorrichtung befindet, einzusehen und gegebenenfalls zu bedienen. Insbesondere Smartphones weisen ein relativ großes Display auf und können nicht nur für Telefoniezwecke, sondern beispielsweise auch zum Abspielen von Filmen oder Ähnlichem verwendet werden. Daher ist es denkbar, dass derartige Mobiltelefone für bestimmte Anwendungen in einer Hochkant-Ausrichtung und für andere Anwendungen in einer Quer-Ausrichtung verwendet werden. Durch die Verschwenkbarkeit der Aufnahmeeinrichtung relativ zu dem Ansatz, mit dem die Haltevorrichtung befestigt ist, ist es möglich, beide Orientierungen des Mobiltelefones in der Haltevorrichtung möglich zu machen.

Dabei verläuft die Schwenkachse vorteilhafterweise senkrecht zur Anlagefläche. Dies bedeutet in den meisten Ausgestaltungen, dass die Schwenkachse auch senkrecht zu einem Display des Mobiltelefones verläuft, wenn sich das Mobiltelefon in der Haltevorrichtung befindet.

Die Haltevorrichtung verfügt in einer bevorzugten Ausführungsform über Rastelemente, so dass die Aufnahmeeinrichtung in wenigstens einer Schwenkposition relativ zu dem Ansatz einrastbar ist. Dadurch wird gewährleistet, dass, sofern die Aufnahmeeinrichtung sich in dieser wenigstens einen Schwenkposition befindet, sie nicht durch während der Fahrt mit einem Kraftfahrzeug auftretende Erschütterungen beispielsweise durch abrupte Fahr- und insbesondere Bremsmanöver oder dem Überfahren von Bordsteinkanten oder Schlaglöchern aus dieser Schwenkposition verschwenkt wird. Dadurch wird eine einfache und bequeme Nutzung des Mobiltelefones, das sich in der Haltevorrichtung befindet, auch in diesen Situationen ermöglicht.

Als besonders vorteilhaft hat sich dabei herausgestellt, wenn die Aufnahmeeinrichtung in drei Schwenkpositionen relativ zu dem Ansatz einrastbar ist, wobei die verschiedenen Schwenkpositionen eine Nullstellung sowie eine um +90° zu der Nullstellung verschwenkte erste Schwenkposition und eine um -90° zu der Nullstellung verschwenkte zweite Schwenkposition umfassen. Ist beispielsweise ein Mobiltelefon in der Nullstellung der Aufnahmeeinrichtung in einer Hochkant-Orientierung in der Haltevorrichtung angeordnet, ist durch die erste und zweite Schwenkposition, die relativ zueinander um 180° verschwenkt sind, gewährleistet, dass das Mobiltelefon in beiden denkbaren Quer-Orientierungen in der Haltevorrichtung bzw. deren Aufnahmeeinrichtung verwendbar ist, ohne dass das Mobiltelefon aus der Haltevorrichtung entfernt werden muss. Die Rastelemente können dabei kleine Vorsprünge sein, die beispielsweise federbelastet sind und beispielsweise aus der Oberfläche eines Drehelementes herausragen. In den Schwenkpositionen, in denen die Aufnahmeeinrichtung einrastbar ist, ragen diese Vorsprünge in dafür vorgesehene Ausnehmungen eines zweiten Drehelementes hinein. Wird nun die Aufnahmeeinrichtung relativ zu dem Ansatz verschwenkt, müssen die Vorsprünge gegen die Federkraft in ihre Ausnehmung hineingedrückt werden, so dass eine Rotation der beiden Drehelemente gegeneinander möglich ist. Wird die nächste Einrastposition erreicht, schnappen die Vorsprünge durch ihre Federbelastung in die dafür vorgesehenen Ausnehmungen zurück und es kommt zu einem Einrasten. Auf diese Weise wird gewährleistet, dass die nötige Stabilität in einer eingerasteten Schwenkposition gewährleistet wird und gleichzeitig ein weiteres Verschwenken ohne die Zuhilfenahme von Werkzeugen oder zu großen nötigen Kraftaufwand möglich wird.

An dem Ansatz befindet sich vorteilhafterweise wenigstens ein Anschluss für eine Kommunikationseinrichtung und/oder eine Stromversorgung. Damit kann beispielsweise der Akku eines sich in der Aufnahmeeinrichtung befindenden Mobiltelefones aufgeladen werden oder eine Kommunikationseinrichtung, die beispielsweise Teil des Kraftfahrzeugs sein kann, durch das Mobiltelefon verwendet werden.

Mit Hilfe einer Zeichnung wird nachfolgend ein Ausführungsbeispiel der vorliegenden Erfindung näher erläutert.

Es zeigen
- **Figur 1**: - eine Haltevorrichtung gemäß einem ersten Ausführungsbeispiel der vorliegenden Erfindung in einer schematischen 3D-Ansicht,
- **Figur 2**: - eine Haltevorrichtung gemäß einem Ausführungsbeispiel der vorliegenden Erfindung in einer anderen schematischen 3D-Ansicht,
- **Figur 3**: - eine Haltevorrichtung gemäß einem Ausführungsbeispiel der vorliegenden Erfindung in einer dritten schematischen 3D-Ansicht,
- **Figur 4**: **-** die schematische Draufsicht auf eine Haltevorrichtung gemäß einem Ausführungsbeispiel der vorliegenden Erfindung mit der Aufnahmeeinrichtung in der Freigabestellung,
- **Figur 5**: - die Darstellung aus **Figur 4** mit der Aufnahmeeinrichtung in der Haltestellung,
- **Figur 6**: - eine schematische Draufsicht auf eine Haltevorrichtung gemäß einem Ausführungsbeispiel der vorliegenden Erfindung mit einer verriegelten Breiteneinstellung,
- **Figur 7**: - die Darstellung aus **Figur 6** mit einer entriegelten Breiteneinstellung,
- **Figur 8**: - eine schematische Draufsicht auf eine Haltevorrichtung nach einem Ausführungsbeispiel der vorliegenden Erfindung mit einer verriegelten Längeneinstellung,
- **Figur 9**: **-** die Darstellung aus **Figur 8** mit einer entriegelten Längeneinstellung,
- **Figur 10**: **-** eine 3D-Ansicht einer Haltervorrichtung gemäß einem weiteren Ausführungsbeispiel der vorliegenden Erfindung,
- **Figur 11**: - die Darstellung einer Einstelleinrichtung eines Halteelementes in einer Explosionsdarstellung,
- **Figur 12**: **-** die Darstellung einer Haltevorrichtung gemäß einem Ausführungsbeispiel der vorliegenden Erfindung in einer teilweisen Explosionsdarstellung,
- **Figur 13**: **-** eine Haltevorrichtung nach einem Ausführungsbeispiel der vorliegenden Erfindung in einer Explosionsdarstellung,
- **Figur 14**: **-** eine Haltevorrichtung gemäß einem weiteren Ausführungsbeispiel der vorliegenden Erfindung,
- **Figur 15**: **-** die Haltevorrichtung aus Figur 14 aus einer geänderten Perspektive,
- **Figur 16**: **-** die Haltevorrichtung aus den Figuren 14 und 15 in einer Rückansicht in drei verschiedenen Schwenkpositionen,
- **Figur 17**: **-** eine Haltevorrichtung gemäß einem Ausführungsbeispiel der vorliegenden Erfindung in einer teilweisen Explosionsdarstellung,
- **Figur 18**: **-** eine Haltevorrichtung gemäß einem weiteren Ausführungsbeispiel der vorliegenden Erfindung in einer teilweisen Explosionsdarstellung und
- **Figur 19**: **-** eine rückseitige Ansicht einer teilweise zerlegten Haltevorrichtung gemäß einem Ausführungsbeispiel der vorliegenden Erfindung.

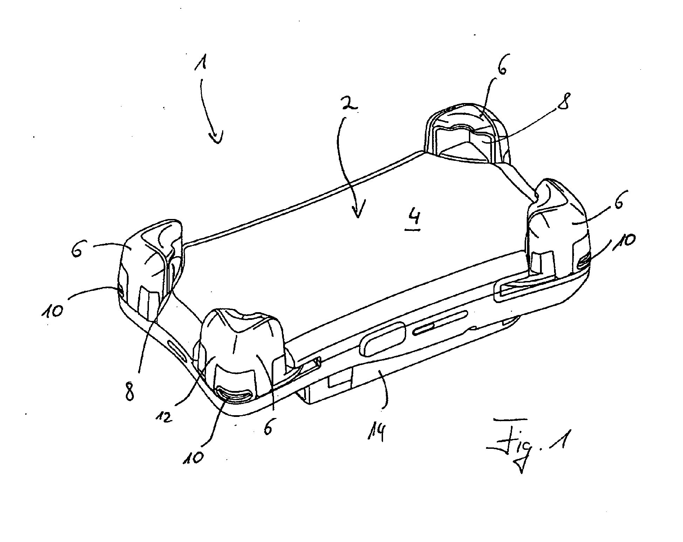

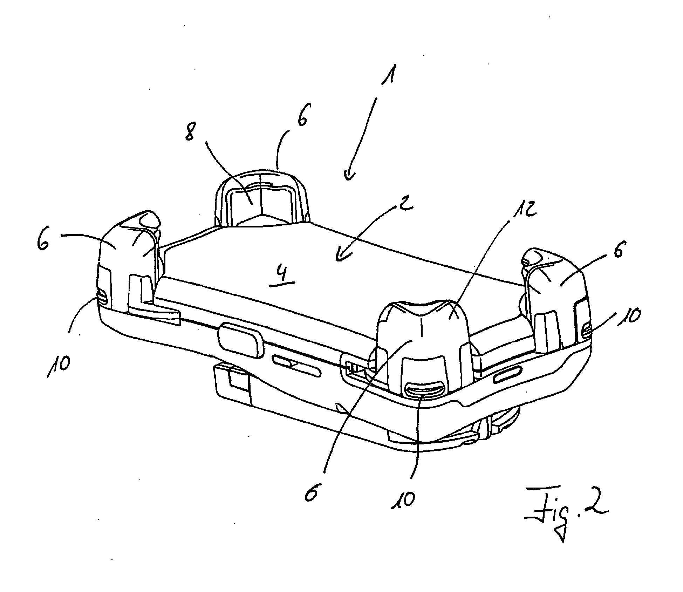

Die **Figuren 1** bis **3** zeigen eine Haltevorrichtung 1 gemäß einem Ausführungsbeispiel der vorliegenden Erfindung aus verschiedenen Blickwinkeln. Die Haltevorrichtung 1 verfügt über eine Aufnahmeeinrichtung 2, die über eine Anlagefläche 4 sowie im gezeigten Ausführungsbeispiel über vier Halteelemente 6 verfügt. Diese sind an den Ecken der Anlagefläche 4 angeordnet und begrenzen so die Aufnahmeeinrichtung 2 in Länge und Breite. Die Höhe der Aufnahmeeinrichtung 2 wird bestimmt durch in den Halteelementen 6 vorgesehene Ausnehmungen 8. Diese sind in den **Figuren 1** bis **3** derart ausgebildet, dass sie die Ecken eines Mobiltelefons, das in die Haltevorrichtung 1 eingelegt wird, umfassen, sodass es zu einem formschlüssigen Zusammenwirken kommt. Die in den **Figuren 1** bis **3** gezeigte Aufnahmeeinrichtung 2 befindet sich in der Haltestellung. Ein Mobiltelefon, das in eine derartige Haltevorrichtung 1 eingelegt wird, kann dieser folglich nicht entnommen werden, ohne dass die Aufnahmeeinrichtung 2 aus der gezeigten Haltestellung in die Freigabestellung gebracht wird oder eine Beschädigung der Haltevorrichtung 1 in Kauf genommen wird.

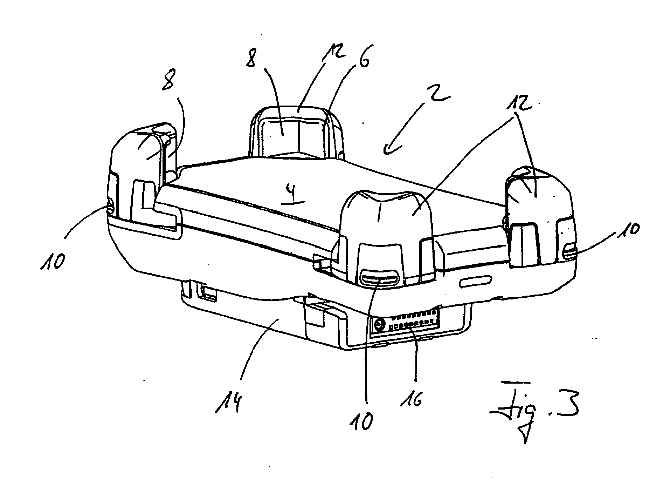

Die Aufnahmeeinrichtung 2 weist in den **Figuren 1** bis **3** vier Halteelemente 6 auf. Jedes dieser Halteelemente 6 weist eine Kappe 12 auf, die nach oben oder unter verschieblich angeordnet ist. Dafür ist eine Einstelleinrichtung vorgesehen, durch die die Länge L, die im Wesentlichen der Höhe der Ausnehmung 8 entspricht, eingestellt werden kann. In den gezeigten Figuren ist von dieser Einstelleinrichtung lediglich ein Stellrad 10 zu erkennen. Durch dieses Stellrad 10 kann die Kappe 12 eines jeden Halteelements 6 separat individuell nach oben beziehungsweise unten verschoben werden und so die Höhe der Aufnahmeeinrichtung 2, und damit die maximale Dicke eines in die Aufnahmeeinrichtung einsetzbaren Mobiltelefons an der jeweiligen Ecke individuell eingestellt werden. An der Unterseite der in den **Figuren 1** bis **3** gezeigten Haltevorrichtung 1 befindet sich ein Ansatz 14, über den die Haltevorrichtung 1 beispielsweise in einem Kraftfahrzeug angeordnet werden kann. Insbesondere in **Figur 3** ist zu erkennen, dass in diesem Ansatz 14 Anschlüsse 16 für Kommunikationseinrichtungen, Stromversorgung und Sonstiges vorgesehen sein können. Damit wird ein in die Haltevorrichtung 1 eingelegtes Mobiltelefon beispielsweise mit Strom versorgt und an eine gegebenenfalls im Fahrzeug vorhandene Freisprecheinrichtung angeschlossen.

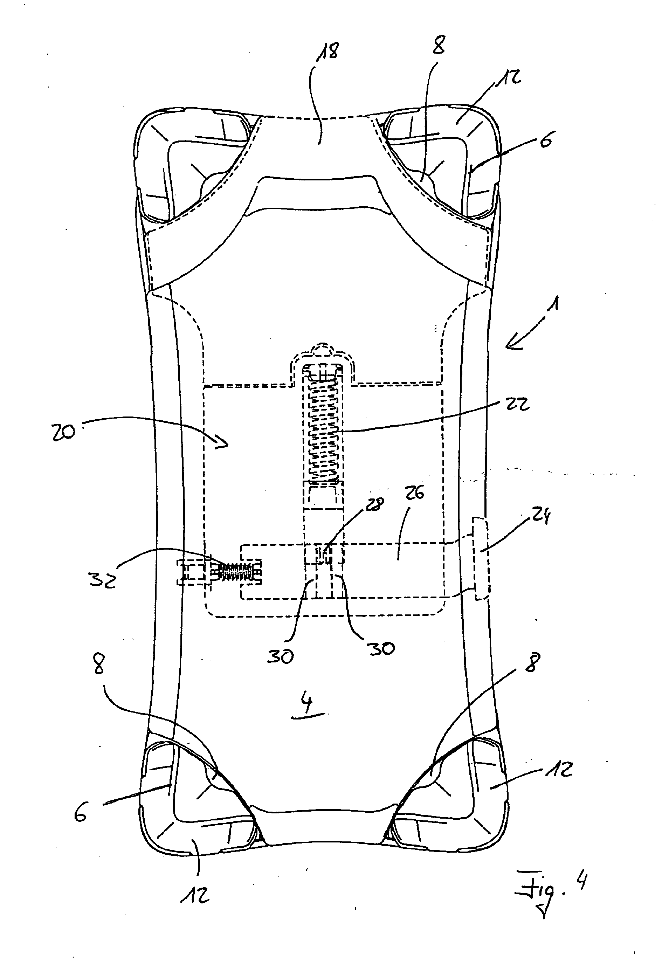

**Figur 4** zeigt die Draufsicht auf eine Haltevorrichtung 1 gemäß einem Ausführungsbeispiel der vorliegenden Erfindung. Dabei sind die durchgezogen gezeichneten Bauteile von oben zu sehen, während die gestrichelt dargestellten Bauteile unter der Anlagefläche 4 verborgen sind. Die in **Figur 4** gezeigte Haltevorrichtung 1 weist eine Aufnahmeeinrichtung 2 auf, die sich in der Freigabestellung befindet. Man erkennt, dass ein Schiebeelement 18 in **Figur 4** nach oben über die Anlagefläche 4 hinausragt. Der Abstand zwischen den beiden oberen den beiden unteren Halteelementen 6 ist folglich größer als die Längenausdehnung des in die Haltevorrichtung 1 einzuführenden Mobiltelefons. Es kann folglich einfach eingelegt werden.

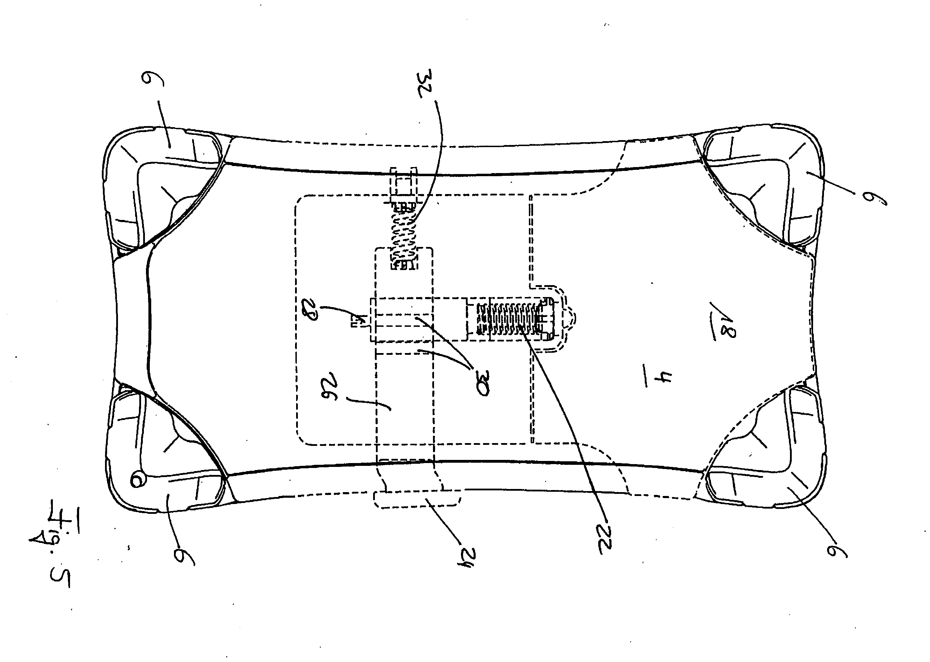

Unterhalb der Anlagefläche 4 befindet sich eine Verriegelungseinrichtung 20, die daher nicht zu sehen ist und somit gestrichelt dargestellt ist. Das Schiebeelement 18 kann in **Figur 4** nach unten geschoben werden, um die Aufnahmeeinrichtung 2 von der in **Figur 4** gezeigten Freigabestellung in die in **Figur 5** gezeigte Haltestellung zu bringen. Dazu muss eine erste Feder 22 komprimiert werden.

Man erkennt in **Figur 4** einen Taster 24, der das eine Ende eines Führungselementes 26 bildet. An diesem Führungselement 26 befinden sich zwei seitliche Wände 30, zwischen denen ein Vorsprung 28 gelagert ist, der daher in **Figur 4** nur nach oben oder unten verschoben werden kann. Der Vorsprung 28 wird dabei verschoben, wenn das Schiebeelement 18 gegen die Federkraft der ersten Feder 22 in **Figur 4** nach unten verschoben wird. Wird das Schiebeelement 18 weit genug nach unten verschoben, wird der Vorsprung 28 die beiden seitlichen Wände 30 verlassen und das Führungselement 26 kann durch die Federkraft einer zweiten Feder 32 nach rechts verschoben werden. Dabei wird das Führungselement 26 genau so weit nach rechts verschoben, dass der Vorsprung 28 nicht mehr zwischen den zwei seitlichen Wänden 30 sondern nun in **Figur 4** und **5** unterhalb einer der seitlichen Wände 30 zu liegen kommt, sodass eine Verschiebung des Schiebeelementes 18 nach oben, der Federkraft der ersten Feder 22 folgend, nicht mehr möglich ist.

Diese Situation ist in **Figur 5** gezeigt. Man erkennt die Aufnahmeeinrichtung 2, die sich in der Haltestellung befindet. Die erste Feder 22 ist durch Eindrücken des Schiebeelementes 18, das sich nun vollständig unterhalb der Anlagefläche 4 befindet, komprimiert worden. Dadurch hat der Vorsprung 28 die beiden seitlichen Wände 30 verlassen, sodass sich die zweite Feder 32 entspannen konnte und das Führungselement 26 mit dem daran befestigten Taster 24 nach rechts verschoben werden konnte. Der Vorsprung 28 liegt nun in **Figur 5** unterhalb der linken der beiden Seitenwände 30 an und kann daher nicht nach oben verschoben werden.

Um nun die in **Figur 5** in der Haltestellung gezeigte Aufnahmeeinrichtung 2 wieder in die Freigabestellung zu bewegen, muss lediglich der Taster 24 und damit das Führungselement 26 leicht nach links verschoben werden. Dann kommt der Vorsprung 28 wieder zwischen den beiden seitlichen Wänden 30 zu liegen, sodass sich die erste Feder 22 entspannen kann und für eine Verschiebung des Schiebeelements 18 nach oben sorgt. Dadurch wird auch der Abstand zwischen den beiden oberen und linken Halteelementen 6, der in **Figur 5** kleiner ist als in **Figur 4****,** wieder vergrößert, sodass ein in die Haltevorrichtung 1 eingelegtes Mobiltelefon ohne Probleme entnommen werden kann.

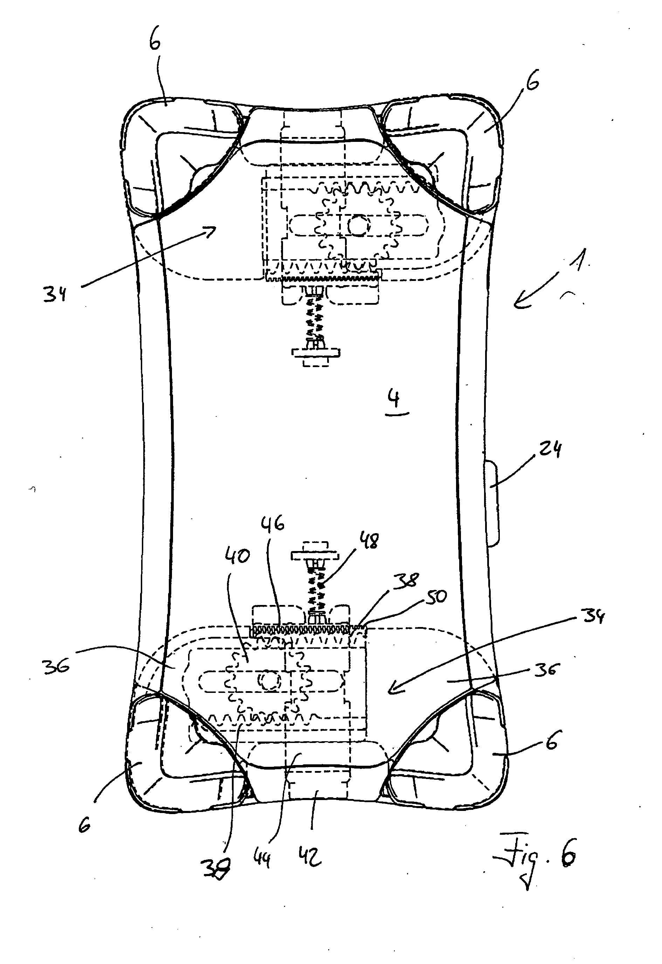

**Figur 6** zeigt wieder eine schematische Draufsicht auf eine Haltevorrichtung 1 gemäß einem Ausführungsbeispiel der vorliegenden Erfindung.

Die Aufnahmeeinrichtung 2 befindet sich in der Halteposition, was in dem gezeigten Ausführungsbeispiel beispielsweise daran zu erkennen ist, dass der Taster 24 wie in **Figur 5** nach rechts über die Anlagefläche 4 hinaussteht.

In **Figur 6** sind wieder Bauteile, die unterhalb der Anlagefläche 4 liegen und daher eigentlich nicht zu sehen sind, gestrichelt dargestellt. Es handelt sich um zwei Breiteneinstellvorrichtungen 34. Dabei ist jeweils eine der beiden Breiteneinstellvorrichtungen 34 für zwei nämlich entweder die oberen beiden oder die unteren beiden Halteelemente 6 vorgesehen. Da beide Breiteneinstellvorrichtungen 34 identisch aufgebaut sind, wird nur anhand der unteren Breiteneinstellvorrichtung 34 das Prinzip erläutert werden.

Jedes der beiden unteren Halteelemente 6 ist mit einem Verbindungsbauteil 36 gekoppelt. Jedes dieser Verbindungsbauteile 36 weist einen Zahnstangenanteil 38 auf. Beide Zahnstangenanteile 38 der Verbindungsbauteile 36 kämmen mit einem gemeinsamen Zahnrad 40.

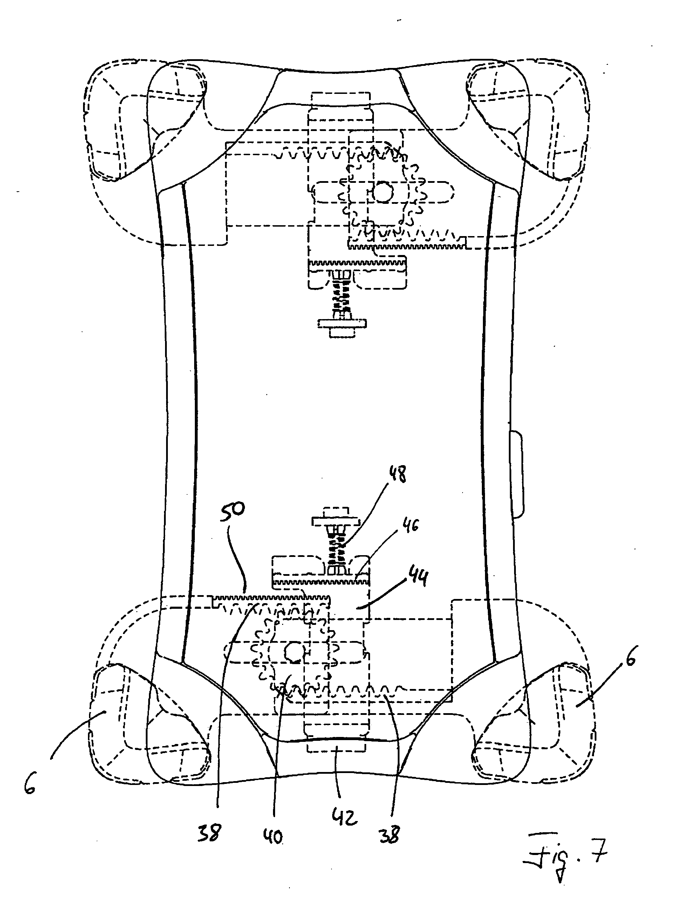

**Figur 6** zeigt die Breiteneinstellvorrichtung 34 in der verriegelten Position. Ein zweiter Taster 42, der mit einem zweiten Führungselement 44 verbunden ist, an dem sich eine erste Zahnstange 46 befindet, kann gegen die Federkraft einer dritten Feder 48 in **Figur 6** nach oben geschoben werden. In **Figur 6** greift die erste Zahnstange 46 in dafür an den Verbindungsbauteilen 36 vorgesehene Zahnreiche 50 ein. Wird nun der Taster 42 in **Figur 6** nach oben verschoben, wird dieser Eingriff gelöst. Diese Situation ist in **Figur 7** dargestellt. Man erkennt, dass der Taster 42 nach oben verschoben wurde. Dadurch wird auch das zweite Führungselement 44 und die erste Zahnstange 46 verschoben. Dies geschieht gegen die Kraft der dritten Feder 48. Nachdem nun die erste Zahnstange 46 und die Zahnreihe 50 nicht mehr miteinander in Eingriff stehen, können die beiden unteren Halteelemente 6, wie in **Figur 7** gezeigt, nach außen verschoben werden. Dabei greifen die Zahnstangenanteile 38 in das Zahnrad 40, das sich dabei dreht. Auf diese Weise kann die Breite der Aufnahmeeinrichtung 2, also der Abstand zwischen den beiden unteren Halteelementen 4 frei eingestellt und insbesondere auf die Breite des aufzunehmenden Mobiltelefons angepasst werden. Die zweite Breiteneinstellvorrichtung 34, die für die beiden oberen Halteelemente 6 in den **Figuren 6** und **7** vorgesehen ist, ist baugleich. Daher wird auf eine erneute Beschreibung verzichtet.

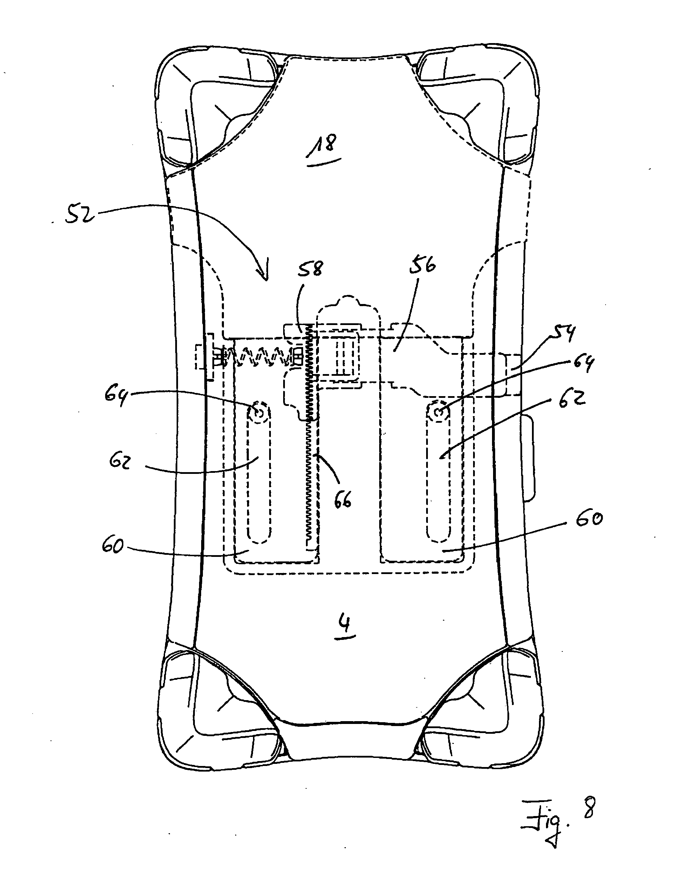

**Figur 8** zeigt eine Draufsicht auf eine Haltevorrichtung 1 gemäß einem Ausführungsbeispiel der vorliegenden Erfindung, bei der gestrichelt eine Längeneinstellvorrichtung 52 dargestellt ist. Ein dritter Taster 54 ist mit einem dritten Führungselement 56 verbunden. An diesem befindet sich eine zweite Zahnstange 58. Unterhalb der Anlagefläche 4 befindet sich das Schiebeelement 18. Dieses verfügt über zwei Schenkel 60, die über jeweils ein Langloch 62 verfügen, in denen jeweils ein Stift 64 angeordnet ist. Zudem befindet sich an einem Schenkel 60 eine zweite Zahnreihe 66.

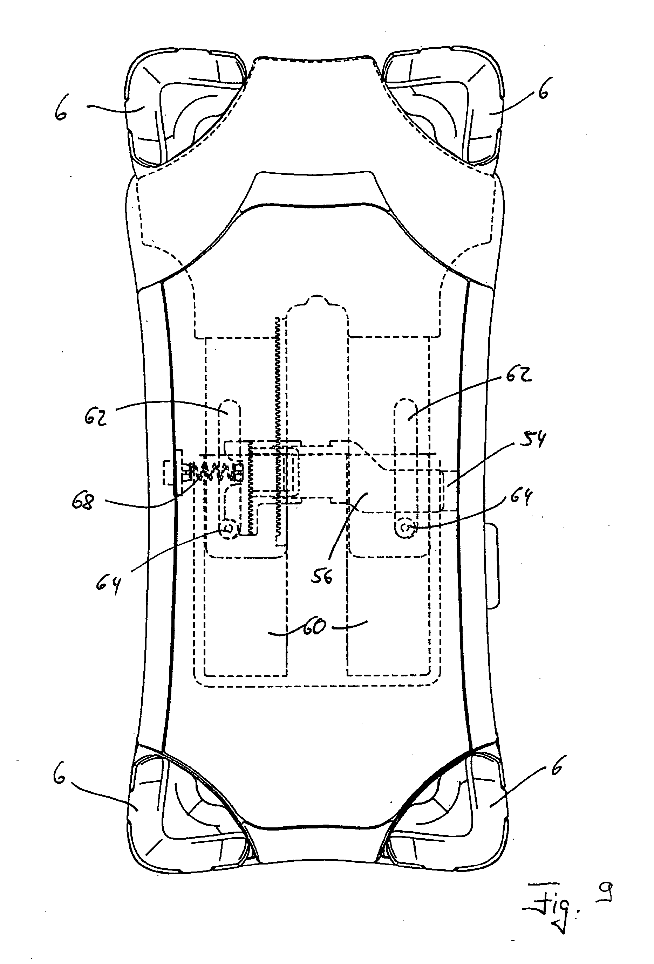

In **Figur 8** greift die zweite Zahnstange 58 in die zweite Zahnreihe 66 ein. Eine Relativbewegung zwischen der Anlagefläche 4 und dem Schiebelement 18 ist daher in dieser Anordnung nicht möglich. Wird nun der dritte Taster 54 in **Figur 8** nach links verschoben, wird die zweite Zahnstange 58 mit der zweiten Zahnreihe 66 außer Eingriff gebracht, sodass die beiden Bauteile gegeneinander verschoben werden können. Diese Situation ist in **Figur 9** dargestellt. Die Bewegung des dritten Führungselementes 56 ist dabei durch eine vierte Feder 68 federbelastet. Sobald der dritte Taster 54 losgelassen wird, wird das dritte Führungselement, der Federkraft der vierten Feder 68 folgend, wieder in die Ausgangsposition zurückgeführt, sodass die zweite Zahnstange 58 und die zweite Zahnreihe 66 wieder in Eingriff miteinander sind. Auf diese Weise kann die Länge der Aufnahmeeinrichtung 2, also der Abstand zwischen den beiden linken und den beiden rechten Halteelementen 6 eingestellt werden.

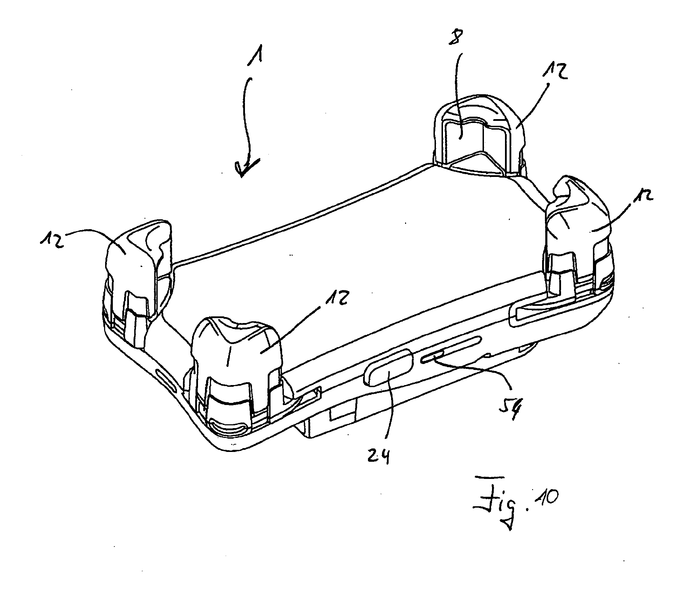

**Figur 10** zeigt eine Haltevorrichtung 1 gemäß einem Ausführungsbeispiel der vorliegenden Erfindung. Die vier an den Ecken angeordneten Halteelemente 6 verfügen jeweils über eine Kappe 12, die über eine Einstelleinrichtung nach oben und unten verschieblich sind. In der in **Figur 10** gezeigten Situation ist die Kappe 12 jeweils am oberen Anschlag angeordnet. Damit ist die Höhe der Ausnehmung 8 und damit die Höhe der Aufnahmeeinrichtung und damit die Länge L maximal, sodass ein möglichst dickes Mobiltelefon in die Aufnahmeeinrichtung 2 der Haltevorrichtung 1 eingeführt werden kann. An der Seitenfläche der in **Figur 10** gezeigten Haltevorrichtung erkennt man den Taster 24, der für die Entriegelung der Entriegelungseinrichtung 20 verwendet werden kann, wenn die Aufnahmeeinrichtung 2 aus der in **Figur 10** gezeigten Haltestellung in die Freigabestellung überführt werden soll. Zudem ist der dritte Taster 54 zu erkennen, mit dem die Einstellung der Länge der Aufnahmeeinrichtung 2 eingestellt werden kann.

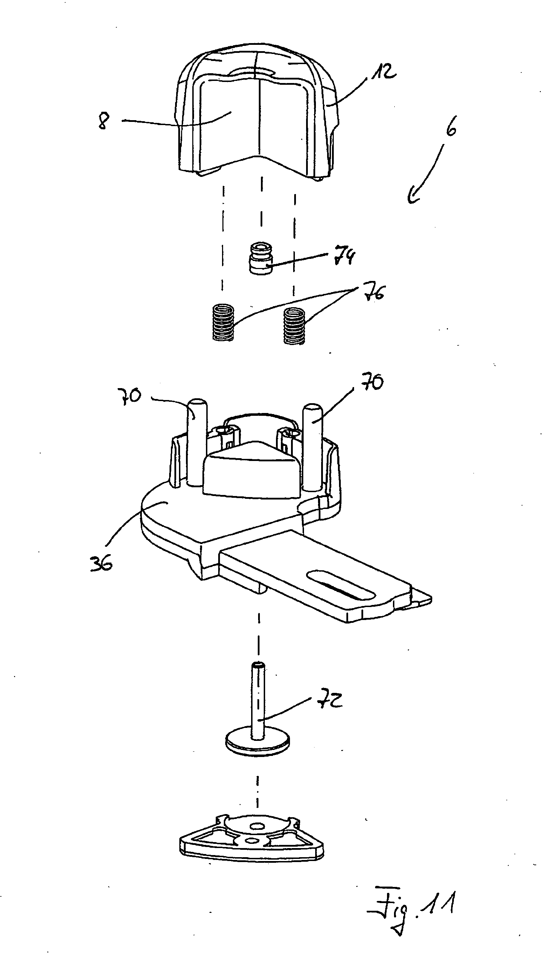

**Figur 11** zeigt ein Halteelement 6 in einer Explosionsdarstellung. Man erkennt die Kappe 12, die über Stützstifte 70 auf dem Verbindungsbauteil 36 angeordnet ist. Durch eine Ausnehmung in dem Verbindungsbauteil 36 wird eine Rändelschraube 72 geführt, die in eine unterhalb der Kappe 12 angeordnete Mutter 74 eingreift. Wird nun die Rändelschraube 72 so gedreht, dass sich die Mutter 74 auf der Rändelschraube 72 nach oben bewegt, wird auch die Kappe 12 durch die Kraft der zwei Springfeder 76 nach oben bewegt. Auf diese Weise kann die Höhe der Kappe 12 und damit die Höhe der Ausnehmung 8 frei eingestellt werden. Dadurch wird auch die Höhe der Aufnahmeeinrichtung 2 eingestellt.

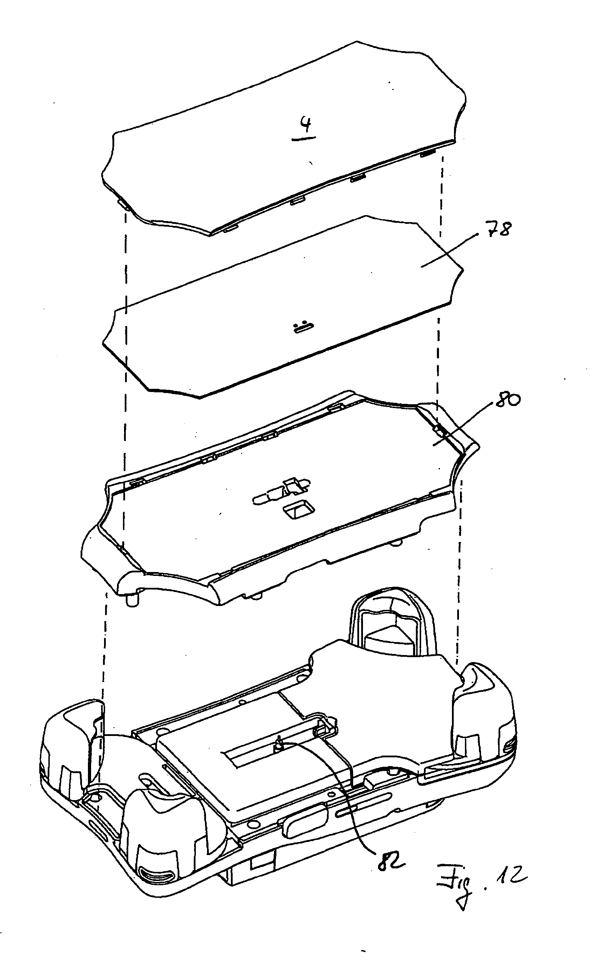

**Figur 12** zeigt eine schematische Ansicht einer Haltevorrichtung 1 gemäß einem Ausführungsbeispiel der vorliegenden Erfindung in einer teilweisen Explosionsdarstellung. Man erkennt die Anlagefläche 4 einen darunter angeordneten universellen Antennenkoppler 78, der auf einer Stützplatte 80 aufliegt, die mit dem Rest der Haltevorrichtung 1 verbunden wird. Der universelle Antennenkoppler 78 hat dabei Kontakt zum Ende eines Antennenkabelanschlusses 82, der von unten aus der Haltevorrichtung 1 hervorsteht.

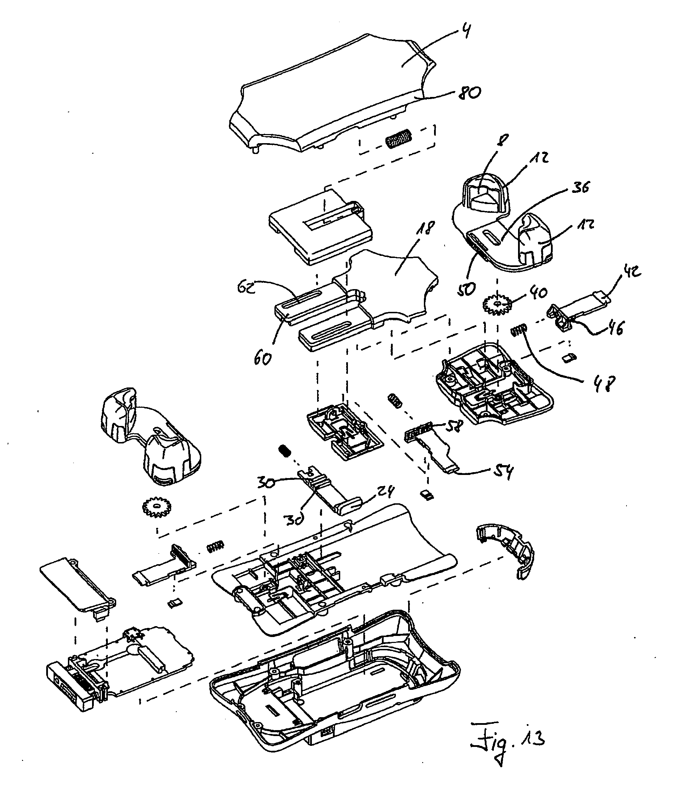

**Figur 13** zeigt eine Haltevorrichtung 1 gemäß einem Ausführungsbeispiel gemäß der vorliegenden Erfindung in einer Explosionsdarstellung. Da die Funktionsweise und Anordnung der relevanten Mechanismen bereits erklärt wurde, wird auf eine erneute Ausführung verzichtet.

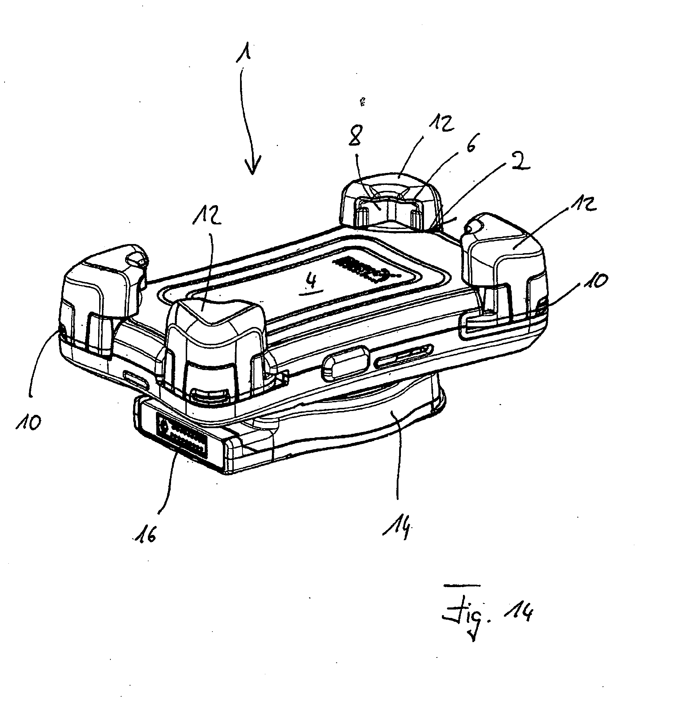

**Figur 14** zeigt eine Haltevorrichtung 1 gemäß einem weiteren Ausführungsbeispiel der vorliegenden Erfindung. Der Unterschied zu den in den Figuren 1 bis 3 dargestellten Ausführungsformen liegt in der Verdrehbarkeit des Ansatzes 14 relativ zur Aufnahmeeinrichtung 2. Der Ansatz 14 ist relativ zu der Aufnahmeeinrichtung 2 um eine Schwenkachse schwenkbar, die senkrecht auf der Anlagefläche 4 steht. Dadurch sind die unterschiedlichen Schwenkpositionen erreichbar, so dass die Verwendung eines Mobiltelefons in einer Hochkant- und einer Quer-Anordnung ermöglicht wird.

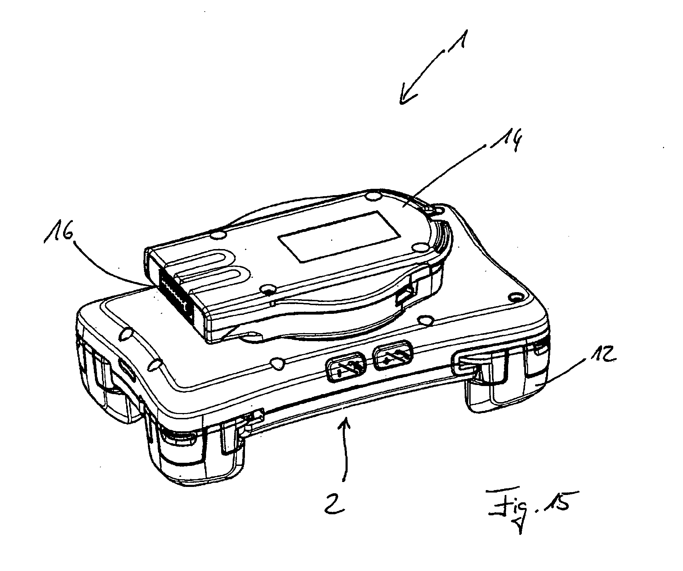

**Figur 15** zeigt die Haltevorrichtung 1 aus Figur 14 aus einer anderen Perspektive. Der Ansatz 14 ist relativ zur Aufnahmeeinrichtung 2 schwenkbar gelagert.

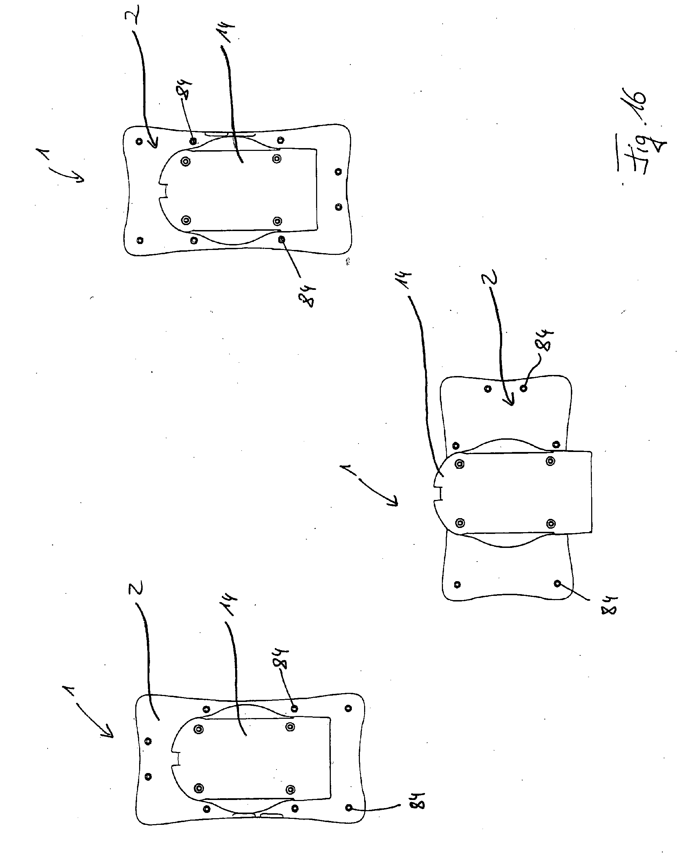

**Figur 16** zeigt die Haltevorrichtung 1 in einer Rückansicht in drei unterschiedlichen Schwenkpositionen. Im mittleren Teil der Figur 16 ist die Haltevorrichtung 1 in der Nullstellung dargestelt. Dabei sind der Ansatz 14 und die Aufnahmeeinrichtung 2 so aneinander angeordnet, dass in der gezeigten Ausführungsform die Aufnahmeeinrichtung 2 in der Quer-Anordnung in der Nullstellung angeordnet ist. Ein Mobiltelefon, das sich in dieser Nullstellung in der Haltevorrichtung 1 befindet, wird folglich im Querformat verwendet. Aus dieser Nullstellung heraus lässt sich die Aufnahmeeinrichtung 2 relativ zum Ansatz 14 um eine Schwenkachse schwenken, die im gezeigten Ausführungsbeispiel senkrecht auf der Zeichenebene steht. Wird die Aufnahmeeinrichtung 2 relativ zum Ansatz 14 um 90° im Uhrzeigersinn gedreht, erhält man die im rechten Teil von Figur 16 dargestellte Anordnung. Man erkennt, dass ein Mobiltelefon, das sich in der Aufnahmeeinrichtung 2 befindet, nun in einer Hochkant-Anordnung verwendet wird. Wird die Aufnahmeeinrichtung 2 aus der im mittleren Bereich der Figur 16 gezeigten Nullstellung jedoch um 90° gegen den Uhrzeigersinn verdreht, erhält man die im linken Teil der Figur 16 dargestellte zweite Schwenkposition. Auch hier wird ein Mobiltelefon, das sich in der Aufnahmeeinrichtung 2 befindet, nun in einer Hochkantposition verwendet. Man erkennt jedoch an der Anordnung von Schraubenausnehmungen 84, dass die erste Schwenkposition und die zweite Schwenkposition gegeneinander um 180° verdreht sind.

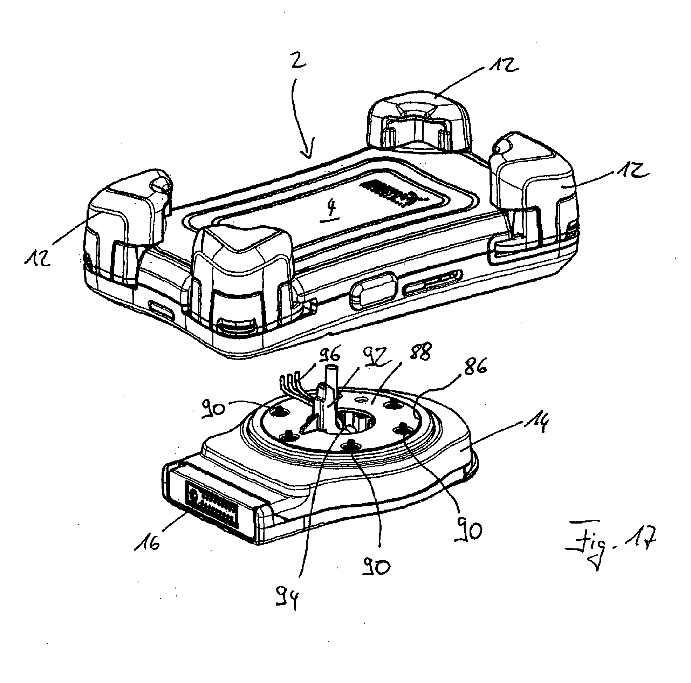

**Figur 17** zeigt die Darstellung aus Figur 14 in einer teilweisen Explosionsansicht. Man erkennt im oberen Bereich die Aufnahmeeinrichtung 2 mit den Kappen 12 und der Anlagefläche 4, in die das Mobiltelefon eingelegt werden kann. Im unteren Bereich der Figur 17 befindet sich der Ansatz 14, mit dem wenigstens einen Anschluss 16. Der Ansatz 14 weist in seiner in Figur 14 oben liegenden Seite eine kreisförmige Ausnehmung 86 auf, in der sich in Figur 17 ein erstes Drehelement 88 befindet. Dieses ist über Schrauben 90 sowie einen nach oben hervorstehenden Pin 92 drehfest mit der Aufnahmeeinrichtung 2 verbunden. Durch eine Mittelausnehmung 94, die sich im ersten Drehelement 88 befindet, können Kabel 96 in die Aufnahmeeinrichtung 2 geführt werden.

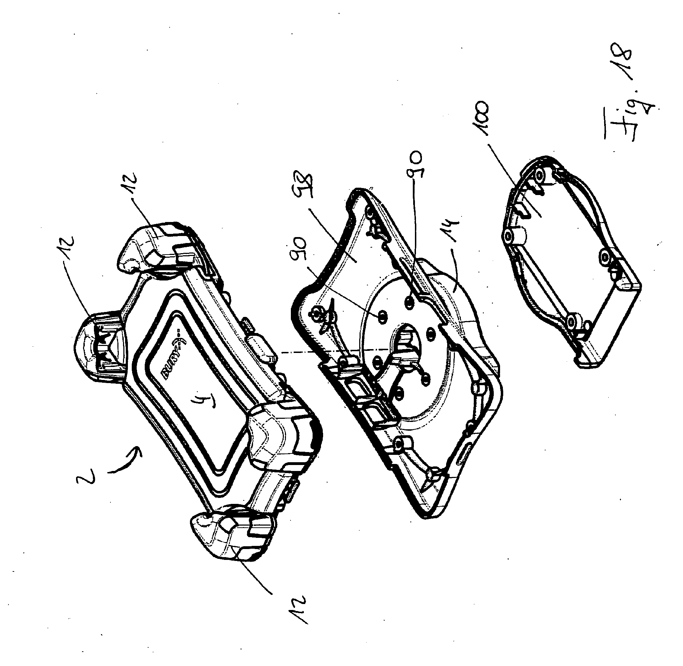

**Figur 18** zeigt die Haltevorrichtung 1 aus Figur 17 in einer anderen teilweisen Explosionsdarstellung. Im oberen Bereich befindet sich die Aufnahmeeinrichtung 2, die wieder über Kappen 12 und eine Anlagefläche verfügt. Darunter befindet sich eine Grundschale 98, an der über die Schrauben 90 das erste Drehelement 88 drehfest befestigt ist. Der Ansatz 14 wird durch eine Verschlusskappe 100 abgeschlossen.

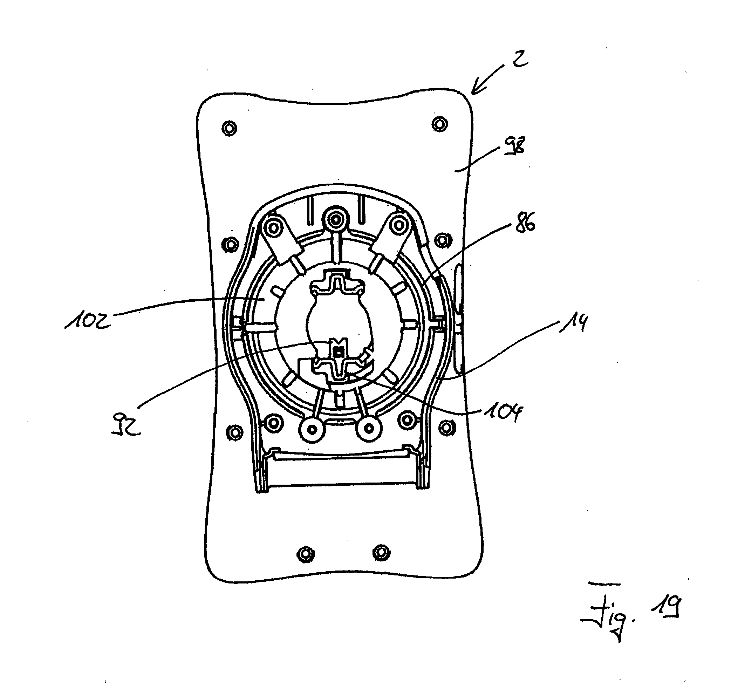

**Figur 19** zeigt eine Ansicht einer Haltevorrichtung 1 gemäß einem Ausführungsbeispiel der vorliegenden Erfindung, bei der die Verschlusskappe 100 entfernt wurde. Man erkennt die Grundschale 98, die die Aufnahmeeinrichtung 2 nach unten hin abdeckt. Daran befindet sich der Ansatz 14, in dem sich die Ausnehmung 86 befindet, in der sich das erste Drehelement 88 drehen kann. Von diesem ist in Figur 19 insbesondere der Pin 92 dargestellt, der eine einfache Orientierung des ersten Drehelementes 88 an der Unterseite der Grundschale 98 ermöglicht. Das erste Drehelement 88 ist drehfest an der Unterseite der Grundschale 98 angeordnet, jedoch innerhalb der Ausnehmung 86 im Ansatz 14 drehbar gelagert. Innerhalb des Ansatzes 14 befindet sich zudem ein zweites Drehelement 102, das drehfest mit dem Ansatz 14 und relativ zum ersten Drehelement 88 verschwenkbar gelagert ist. An diesem befinden sich Rastelemente 104, die in dafür vorgesehene Ausnehmungen, die in Figur 19 nicht dargestellt sind, eingreifen können, sofern sich die Aufnahmeeinrichtung 2 relativ zum Ansatz 14 in einer der einrastbaren Schwenkpositionen befindet.

### Bezugszeichenliste

- 1: Haltevorrichtung
- 2: Aufnahmeeinrichtung
- 4: Anlagefläche
- 6: Halteelement
- 8: Ausnehmung
- 10: Stellrad
- 12: Kappe
- 14: Ansatz
- 16: Anschlüsse
- 18: Schiebeelement
- 20: Verriegelungseinrichtung
- 22: Erste Feder
- 24: Taster
- 26: Führungselement
- 28: Vorsprung
- 30: Seitliche Wand
- 32: Zweite Feder
- 34: Breiteneinstellvorrichtung
- 36: Verbindungsbauteil
- 38: Zahnstangenanteil
- 40: Zahnrad
- 42: Zweiter Taster
- 44: Zweites Führungselement
- 46: Erste Zahnstange
- 48: Dritte Feder
- 50: Zahnreihe
- 52: Längeneinstellvorrichtung
- 54: Dritter Taster
- 56: Drittes Führungselement
- 58: Zweite Zahnstange
- 60: Schenkel
- 62: Langloch
- 64: Stift
- 66: Zweite Zahnreihe
- 68: Vierte Feder
- 70: Stützstift
- 72: Rändelschraube
- 74: Mutter
- 76: Springfeder
- 78: Universeller Antennenkoppler
- 80: Stützplatte
- 82: Antennenkabelanschluss
- 84: Schraubenausnehmung
- 86: Ausnehmung
- 88: Erstes Drehelement
- 90: Schraube
- 92: Pin
- 94: Mittelausnehmung
- 96: Kabel
- 98: Grundschale
- 100: Verschlusskappe
- 102: Zweites Drehelement
- 104: Rastelement

## Patentansprüche

1. Haltevorrichtung (1) für ein Mobiltelefon, mit einer Aufnahmeeinrichtung (2) zum Aufnehmen des Mobiltelefons, die eine Anlagefläche (4) und wenigstens zwei Halteelemente (6) umfasst, die von der Anlagefläche (4) hervorstehen, **dadurch gekennzeichnet, dass** zumindest eines der Halteelemente (6) eine Einstelleinrichtung zum Einstellen einer Länge L aufweist, um die das Halteelement (6) von der Anlagefläche (4) hervorsteht, und wobei die Aufnahmeeinrichtung (2) in eine Haltestellung und in eine Freigabestellung bringbar ist, wobei die Aufnahmeeinrichtung (2) ausgebildet ist, in der Haltestellung mit einem in die Haltevorrichtung (1) eingesetzten Mobiltelefon formschlüssig zusammenzuwirken.

2. Haltevorrichtung (1) nach Anspruch 1, **dadurch gekennzeichnet, dass** die Aufnahmeeinrichtung (2) vier Halteelemente (6) umfasst, die an vier Ecken der Aufnahmeeinrichtung (2) angeordnet sind.

3. Haltevorrichtung (1) nach Anspruch 1 oder 2, **dadurch gekennzeichnet, dass** jedes Halteelement (6) eine Einstelleinrichtung aufweist.

4. Haltevorrichtung (1) nach Anspruch 1 oder 2, **dadurch gekennzeichnet, dass** eine Mehrzahl von Halteelementen (6) eine gemeinsame Einstelleinrichtung aufweist, durch die die Länge L dieser Mehrzahl von Halteelemente (6) gemeinsam einstellbar ist.

5. Haltevorrichtung (1) nach einem der vorstehenden Ansprüche, **dadurch gekennzeichnet, dass** die Einstelleinrichtung eine Rändelschraube (72) umfasst.

6. Haltevorrichtung (1) nach einem der vorstehenden Ansprüche, **dadurch gekennzeichnet, dass** eine Breite der Aufnahmeeinrichtung (2) mittels einer Breiteneinstellvorrichtung (34) einstellbar ist.

7. Haltevorrichtung (1) nach einem der vorstehenden Ansprüche, **dadurch gekennzeichnet, dass** eine Länge der Aufnahmeeinrichtung (2) mittels einer Längeneinstellvorrichtung (52) einstellbar ist.

8. Haltevorrichtung (1) nach einem der vorstehenden Ansprüche, **dadurch gekennzeichnet, dass** eine Verriegelungseinrichtung (20) vorgesehen ist, die die Aufnahmeeinrichtung (2) in der Haltestellung verriegelt.

9. Haltevorrichtung (1) nach einem der vorstehenden Ansprüche, **dadurch gekennzeichnet, dass** sie eine universelle Antenne umfasst.

10. Haltevorrichtung (1) nach einem der vorstehenden Ansprüche, **dadurch gekennzeichnet, dass** sie einen Mini-USB-Anschluss umfasst.

11. Haltevorrichtung (1) nach einem der vorstehenden Ansprüche, **dadurch gekennzeichnet, dass** die Haltevorrichtung (1) an einer der Aufnahmeeinrichtung (2) abgewandten Seite einen Ansatz (14) zum Befestigen der Haltevorrichtung (1) aufweist, wobei die Aufnahmeeinrichtung (2) relativ zu dem Ansatz (14) um eine Schwenkachse schwenkbar gelagert ist.

12. Haltevorrichtung (1) nach Anspruch 11, **dadurch gekennzeichnet, dass** die Schwenkachse senkrecht zur Anlagefläche (4) verläuft.

13. Haltevorrichtung (1) nach Anspruch 11 oder 12, **dadurch gekennzeichnet, dass** die Haltevorrichtung (1) Rastelemente (104) aufweist, so dass die Aufnahmeeinrichtung (2) in wenigstens einer Schwenkposition relativ zudem Ansatz (14) einrastbar ist.

14. Haltevorrichtung (1) nach Anspruch 13, **dadurch gekennzeichnet, dass** die Aufnahmeeinrichtung (2) in drei Schwenkpositionen relativ zu dem Ansatz (14) einrastbar ist, wobei die verschiedenen Schwenkpositionen eine Nullstellung sowie eine um +90° zu der Nullstellung verschwenkte erste Schwenkposition und eine um -90° zu der Nullstellung verschwenkte zweite Schwenkposition umfassen.

15. Haltevorrichtung (1) nach einem der Ansprüche 11 bis 14, **dadurch gekennzeichnet, dass** an dem Ansatz (14) wenigstens ein Anschluss (16) für eine Kommunikationseinrichtung und/oder eine Stromversorgung angeordnet ist.
